# EUROPEAN PATENT APPLICATION

(11) **EP 3 579 597 A1**
(43) Date of publication of application: **11.12.2019**
(21) Application number: 18305681.1
(22) Date of filing: 04.06.2018
(51) Int. Cl.: H04W 12/06, H04W 12/08, H04W 12/10, H04L 29/06

(54) **METHOD FOR SECURELY PULLING A CONTAINER IMAGE TO A LOCAL REGISTRY OF A NODE**

(71) Applicant: GEMALTO SA, 92190 Meudon (FR)
(72) Inventor: FOKLE-KOKOU, Milas, 92190 Meudon (FR); HUYSMANS, Guillaume, 92190 Meudon (FR); VEERAPPAN, Vivek, 92190 Meudon (FR)
(74) Representative: Bricks, Amélie

(57) **Abstract**

The present invention relates to a method for securely pulling, to a local registry of a node among a plurality of nodes, a container image among a plurality of container images stored in a central registry ,
wherein said node is configured to execute a container manager configured for running, on the node, instances of container images stored in the local registry of the node, said instances being called software containers,
wherein said central registry is configured to be connected to a database comprising, for each node of the plurality of nodes, a cryptographic key of the node and access rights of the node to said container images stored by said central registry,
and comprising, performed by the central registry, the steps of:
- receiving (S2) from a node of said plurality of nodes a request for pulling a container image to a local registry of the node,
- authenticating (S3) the requesting node using the cryptographic key of the requesting node stored in the database,
- checking (S4) access rights of the requesting node to the requested container image using the access rights of the requesting node to the requested container image stored in the database,
- when the requesting node is successfully authenticated and has access rights to the requested container image, providing (S5) the requesting node with the requested container image and a signature of the requested container image enabling the container manager of the requesting node to verify the integrity of the provided container image before storing the requested container image in the local registry of the requesting node (S6).

## Description

### FIELD OF THE INVENTION

The present invention relates to software containers and more particularly to a method for securely pulling a container image to a local registry of a node.

### BACKGROUND OF THE INVENTION

Software containers are efficient means to deploy on a computing device, called node, an instance of an OS running one or more applications. Software containers are therefore widely used for deploying an execution environment on a distant server such as a cloud service. Virtualization can be performed very easily using software containers by deploying on a single node several containers that are isolated from each other.

Each node runs a container manager software in charge of deploying and managing the containers run on the node. In order to deploy a new container, the container manager runs on the node an instance of a container image stored in a local registry of the node. Usually, a container image may be loaded in the local registry by an administrator of the node or it may be pulled from a central registry shared by multiple nodes.

In existing solutions, the process of loading and storing new container images in the local registry of a node is not secured. Any container image may be stored in the local registry of a node and instantiated as a software container by the manager of the node; any container image pulled from a central registry is deemed safe; the container manager of a node may pull any image stored in a central registry it has access to. Such a lack of security mechanisms may enable an attacker to perform malicious actions by uploading a corrupted container image to the central registry and have it instantiated multiple times on multiple nodes unaware that the container image they pulled from the central registry had been corrupted.

Consequently there is a need for a method, and an associated system, enabling to securely pull a container image to a local registry of a node.

### SUMMARY OF THE INVENTION

For this purpose and according to a first aspect, this invention therefore relates to a method for securely pulling, to a local registry of a node among a plurality of nodes, a container image among a plurality of container images stored in a central registry,
wherein said node is configured to execute a container manager configured for running, on the node, instances of container images stored in the local registry of the node, said instances being called software containers,
wherein said central registry is configured to be connected to a database comprising, for each node of the plurality of nodes, a cryptographic key of the node and access rights of the node to said container images stored by said central registry,
and comprising, performed by the central registry, the steps of:
- receiving from a node of said plurality of nodes a request for pulling a container image to a local registry of the node,
- authenticating the requesting node using the cryptographic key of the requesting node stored in the database,
- checking access rights of the requesting node to the requested container image using the access rights of the requesting node to the requested container image stored in the database,
- when the requesting node is successfully authenticated and has access rights to the requested container image, providing the requesting node with the requested container image and a signature of the requested container image enabling the container manager of the requesting node to verify the integrity of the provided container image before storing the requested container image in the local registry of the requesting node.

Such a method prevents pulling a forged container image to the local registry of the requesting node since no signature would match such a forged container image. In addition, even if an attacker was able to have a malicious image stored in the central registry, it would not be pulled to the node since the node would not have predefined access rights to it.

An orchestrator software running on an orchestrator device connected to the central registry and to the requesting node, the method according to the first aspect may comprise, previously, during an enrolment phase, at initialization of the requesting node :
- receiving from the orchestrator device a request of registration of the requesting node comprising a list of container images stored in the central registry and access rights of the requesting node to each container image of said list, and the cryptographic key of the requesting node,
- registering the requesting node,
- storing in the database the received cryptographic key and the received access rights for each container image of said received list for the requesting node.

Such a registration enables the orchestrator to provide the central registry with all the elements needed later at runtime to authenticate a requesting node and check its access rights to a requested image.

The database further comprising an expiration date of each container image stored in the central registry, the method according to the first aspect may comprise a step of checking the expiration date of the requested container image stored in the database, the requested container image being provided to the requesting node only if the expiration date of the requested container image is not expired.

By doing so, even if an attacker was able to have a malicious container image stored in the central registry at a given time, it could not be pulled anymore to any node after the expiration date has expired.

According to a second aspect, this invention relates to a computer program product directly loadable into the memory of at least one computer, comprising software code instructions for performing the steps of the method according to the first aspect of the invention when said product is run on the computer.

According to a third aspect, this invention relates to a central registry comprising a processor, a memory configured to store a plurality of container images and an input-output interface,
said processor, said memory and said input-output interface being configured to perform the steps of the method according to the first aspect of the invention and said central registry being configured to be connected to a database comprising, for each node of the plurality of nodes, a cryptographic key of the node and access rights of the node to said container images stored by said central registry.

According to a fourth aspect, the invention relates to a system comprising a central registry according to the third aspect and said plurality of nodes each with a local registry.

According to a fifth aspect, the invention relates to a system according to the fourth aspect and comprising further an orchestrator device connected to the plurality of nodes and to the central registry, said orchestrator device being configured to run an orchestrator software and, during an enrolment phase, at initialization of a requesting node, to send a request of registration of the requesting node comprising a list of container images stored in the central registry and access rights of the requesting node to each container image of said list, and the cryptographic key of the requesting node; and said central registry being configured to perform the steps of the method according to the first aspect of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a system according to the present invention;
- Figure 2 is a schematic illustration of a central registry according to the present invention;
- Figure 3 is a schematic illustration of the steps performed during an enrollment phase of a method for securely pulling, to a local registry of a node, a container image according to an embodiment of the present invention;
- Figure 4 is a schematic illustration of the steps performed during a runtime phase of a method for securely pulling, to a local registry of a node, a container image according to an embodiment of the present invention.

### DETAILED DESCRIPTION OF EMBODIMENTS OF THE INVENTION

In the description detailed below, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims, appropriately interpreted, along with the full range of equivalents to which the claims are entitled.

The invention relates to a method for securely pulling a container image from a central registry to a local registry of a node performed by a system 100.

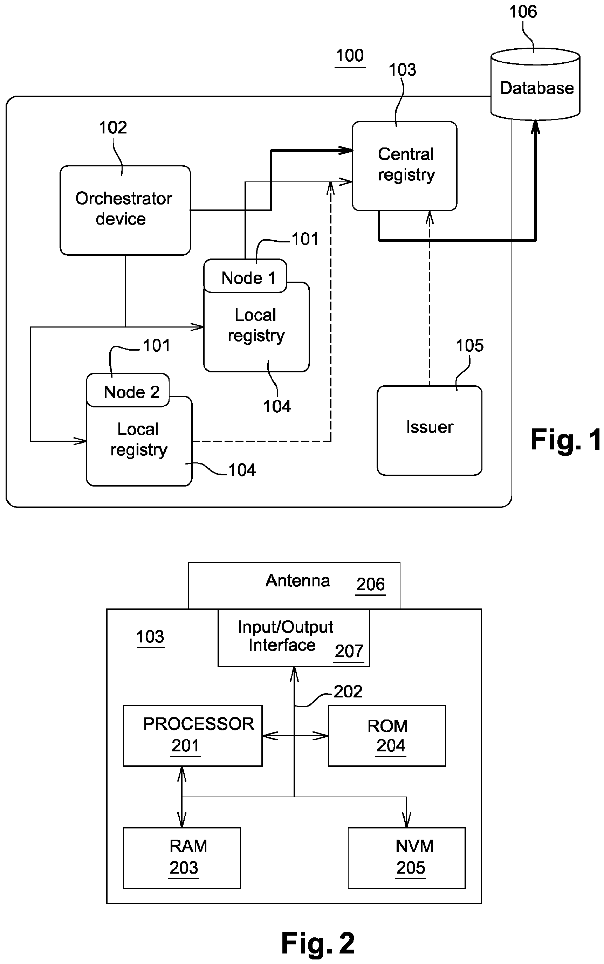

As shown on **Figure 1**, the system 100 according to the invention comprises one or more nodes 101 on which container images are to be deployed. The system 100 may also comprises an orchestrator device 102 in charge of managing the deployment of container images on the nodes 101. It also comprises a central registry 103 in charge of storing and providing to the nodes said container images.

**Figure 2** is a schematic illustration of the central registry103. It may include a processor 201 connected via a bus 202 to a random access memory (RAM) 203, a read-only memory (ROM) 204, and/or a non-volatile memory (NVM) 205. It may further include a connector connected to the bus and by which the central registry may be connected to an antenna 206. Such an antenna may be used to connect the central registry to various forms of wireless networks, e.g., wide-area networks, WiFi networks, or mobile telephony networks. Alternatively, the central registry may connect to networks via wired network connections such as Ethernet. The central registry may also include an input/output interface 207 providing interfaces to the user of the central registry, such as one or more screens, loudspeakers, a mouse, tactile surfaces, a keyboard etc...

Such a central registry may for example be a personal computer or computer server. Such a computer or server may not be dedicated to its role in the frame of the system 100 and may perform other tasks in parallel, especially in the case of a shared remote server involved in cloud applications.

The orchestrator device and the nodes may have the same structure and may comprise the same kind of components.

Each of the nodes 101 has access to a local registry 104 configured to store the container images to be instantiated on the node. Such a local registry may be a part of the NVM 205 of the node. Alternatively, the local registry of a node may be a storage area located on a storage device connected to the node.

The nodes 101 of the system are all connected to the orchestrator device 102 and to the central registry 103 through a network such as an Ethernet or Wifi network.

Each node executes a container manager software, in charge of running instances of container images on the node and then managing these instances, called software containers, up to the end of their execution. Several instances of a single container image or of multiple different container images may run at the same time in parallel on the same node, all managed by the single container manager software of the node.

The orchestrator device 102 executes an orchestrator software in charge of requesting to the container managers of the nodes 101 the deployment of instances of container images on these nodes.

The main idea of the invention is to prevent the deployment of an unsecure container image on a node by making the orchestrator device register each node to the central registry in an enrollment step, making the central registry check access rights of a requesting node to a requested container image before providing it and requiring a verification of a signature of a container image before instantiating it on a node.

In order to do so, the orchestrator device 102 is also connected to the central registry 103, which enables the orchestrator device to send to the central registry registration information for each node during an enrollment phase.

In addition, the central registry is connected to a database 106 storing for each registered node a cryptographic key and access rights of the node to the container images stored by the central registry. Such elements enable the central registry to check the access rights of a requesting node to a requested container image.

For example, the orchestrator software may be Kubernetes, Docker Swarm or Apache Mesos and the container manager software may be Docker, GKE or CoreOS rkt.

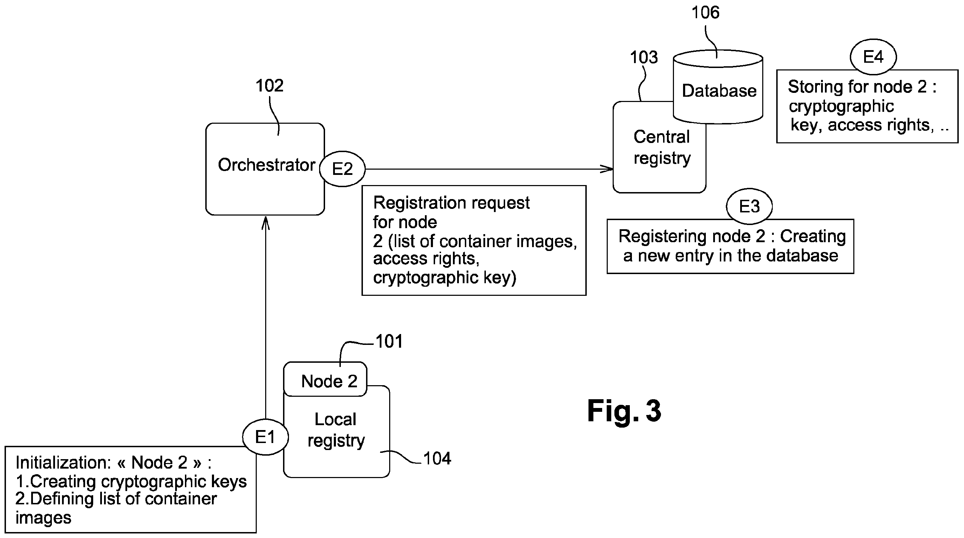

The following paragraphs describe, as illustrated on **Figure 3****,** the steps performed during an enrollment phase for registering a node at its initialization. In these paragraphs, actions performed by the container manager of a node or by the orchestrator software of the orchestrator device are described as performed respectively by the node and by the orchestrator.

During a first enrollment step E1, the node being initialized creates a cryptographic secret key or a pair of public and private cryptographic keys. It also defines a list of container images it wishes to have access to. These elements are transmitted by the node to the orchestrator.

During a second enrollment step E2, the orchestrator may check the received data and transmits to the central registry a request of registration of the node comprising a list of container images stored in the central registry and access rights of the node to each container image of said list, and a cryptographic key of the node such as a public key created by the node in the first step.

During a third enrollment step E3, the central registry registers the node by creating an entry for the node in the database registering its identity. Such an identity may be defined by the name of the node, by its IP address, by an additional label attributed to the node ...

Then during a fourth enrollment step E4, the central registry stores in the database for the node the received cryptographic key and the received access rights for each container image of the received list.

By doing so, at the end of the fourth enrollment step, the central registry knows the identity of the node, has means to authenticate it, and knows which container images the node is entitled to have access to.

Such enrollment steps shall be repeated for each new node initialized in the system according to the invention.

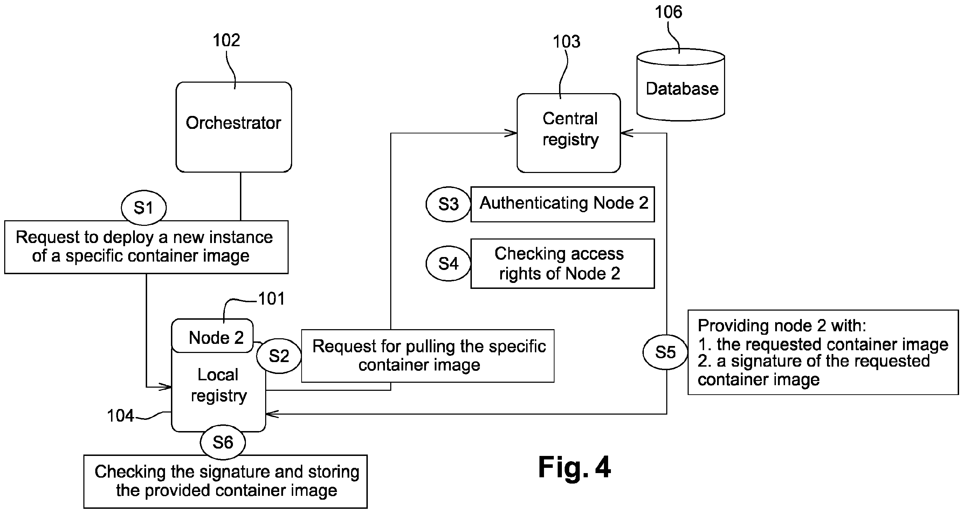

The following paragraphs describe, as illustrated on **Figure 4****,** the steps performed after the enrollment of a node, when a new instance of a container image shall be executed on the node.

During a first runtime step S1, the orchestrator 102 sends to the node 101 a request to deploy a new instance of a specific container image.

During a second runtime step S2, the node checks if the specific container image is already stored in its local registry, and if it is not, it sends to the central registry a request for pulling the specific container image to its local registry.

During a third runtime step S3, the central registry authenticates the requesting node using the cryptographic key of the requesting node stored in the database. A challenge response authentication may be used to perform such an authentication.

During a fourth runtime step S4, the central registry checks the access rights of the requesting node to the requested container image using the access rights of the requesting node to the requested container image stored in the database.

Then during a fifth runtime step S5, when the requesting node is successfully authenticated and has access rights to the requested container image, the central registry provides the requesting node with the requested container image.

By doing so, even if an attacker manages to have a malicious container image stored in the central registry, such a malicious container image may not be pulled to a node unless it has the identity of an existing container image the node is already entitled to pull from the central registry. The central registry will block any request for pulling a new container image since the node does not have access rights to such a new container image.

In a first embodiment, for providing the requested container image to the node, the central registry sends the container image to the node.

In a second embodiment, the central registry may make the container image available to the node at some storage area and the node may download it from there.

The central registry may in addition generate and provide to the requesting node a signature of the requested container image. Such a signature enables the container manager of the requesting node to verify the integrity of the provided container image before storing the requested container image in the local registry of the requesting node.

More precisely, the central registry may generate a hash of the container image, and a security file comprising this hash and additional information such as the name of an issuer 105 of the image, a version number, a date of issuance... In such a case, the central registry then provides the security file and a signature of the security file to the requesting node.

During a sixth runtime step S6, the requesting node checks the signature provided by the central registry; and stores the provided container image in its local registry only if the signature is successfully verified.

Such a verification of the signature of a container image by the node enables the node to verify the authenticity of the container image provided by the central registry and to make sure that the provided container is not a forged one. Such a signature verification may also be performed for container images directly loaded on the node by an administrator of the node, therefore preventing any loading of a forged image in the local registry by the administrator himself.

The central registry may itself verify a signature of the container image. For example the central registry may check a signature of a new container image generated by the issuer 105 of this new container image when it gets this new container image from the issuer 105 of the image. The central registry may check again the signature of a container image when this image is requested by a node, before providing it to the requesting node.

The database may further comprise an expiration date of each container image stored in the central registry. In such a case, before providing a requested container image to a node, the central registry may check the expiration date of the requested container image stored in the database. The requested container image is provided to the requesting node only if the expiration date of the requested container image is not expired.

According to a second aspect, the invention relates to a computer program product directly loadable into the memory of at least one computer, comprising software code instructions for performing, when said product is run on the computer, the steps of the method described here before.

According to a third aspect, the invention relates to a central registry comprising a processor, a memory configured to store a plurality of container images and an input-output interface,
said processor, said memory and said input-output interface being configured to perform the steps of the method described here before and said central registry being configured to be connected to a database comprising, for each node of the plurality of nodes, a cryptographic key of the node and access rights of the node to said container images stored by said central registry.

According to a fourth aspect, the invention relates to a system comprising a central registry according to the third aspect and said plurality of nodes each with a local registry described here before.

According to a fifth aspect, the invention relates to a system according to the fourth aspect and comprising further an orchestrator device connected to the plurality of nodes and to the central registry,
said orchestrator device being configured to run an orchestrator software and, during an enrolment phase, at initialization of a requesting node, to send a request of registration of the requesting node comprising a list of container images stored in the central registry and access rights of the requesting node to each container image of said list, and the cryptographic key of the requesting node; and said central registry being configured to perform the steps of the method described here before.

In addition to these features, the computer program according to the second aspect of the invention, the central registry according to the third aspect of the invention and the system according to the fourth aspect and the fifth aspect of the invention may be configured for performing or may comprise any other features described here before.

Therefore, the proposed method and systems enable to prevent the loading of any forged container image in the local registry of a node, either from a central registry or directly by an administrator of the node, and therefore secure the process of pulling a container image to the local registry of the node.

## Claims

1. A method for securely pulling, to a local registry (104) of a node (101) among a plurality of nodes, a container image among a plurality of container images stored in a central registry (103),
wherein said node (101) is configured to execute a container manager configured for running, on the node, instances of container images stored in the local registry of the node, said instances being called software containers,
wherein said central registry is configured to be connected to a database (106) comprising, for each node of the plurality of nodes, a cryptographic key of the node and access rights of the node to said container images stored by said central registry,
and comprising, performed by the central registry, the steps of:
- receiving (S2) from a node of said plurality of nodes a request for pulling a container image to a local registry of the node,
- authenticating (S3) the requesting node using the cryptographic key of the requesting node stored in the database,
- checking (S4) access rights of the requesting node to the requested container image using the access rights of the requesting node to the requested container image stored in the database,
- when the requesting node is successfully authenticated and has access rights to the requested container image, providing (S5) the requesting node with the requested container image and a signature of the requested container image enabling the container manager of the requesting node to verify the integrity of the provided container image before storing the requested container image in the local registry of the requesting node (S6).

2. The method of claim 1, wherein an orchestrator software runs on an orchestrator device (102) connected to the central registry (103) and to the requesting node (101) and comprising, previously, during an enrolment phase, at initialization of the requesting node :
- receiving (E2) from the orchestrator device a request of registration of the requesting node comprising a list of container images stored in the central registry and access rights of the requesting node to each container image of said list, and the cryptographic key of the requesting node,
- registering (E3) the requesting node,
- storing (E4) in the database the received cryptographic key and the received access rights for each container image of said received list for the requesting node.

3. The method of claim 1 or claim 2, wherein the database (106) further comprises an expiration date of each container image stored in the central registry and comprising a step of checking the expiration date of the requested container image stored in the database, the requested container image being provided to the requesting node only if the expiration date of the requested container image is not expired.

4. A computer program product directly loadable into the memory of at least one computer, comprising software code instructions for performing the steps of any one of claims 1 to 3 when said product is run on the computer.

5. A central registry (103) comprising a processor (201), a memory (203, 204, 205) configured to store a plurality of container images and an input-output interface (207),
said processor, said memory and said input-output interface being configured to perform the steps of any one of claims 1 to 3 and said central registry being configured to be connected to a database (106) comprising, for each node of the plurality of nodes, a cryptographic key of the node and access rights of the node to said container images stored by said central registry.

6. A system (100) comprising a central registry (103) according to claim 5 and said plurality of nodes (101) each with a local registry.

7. The system of claim 6, comprising further an orchestrator device (102) connected to the plurality of nodes (101) and to the central registry (103), said orchestrator device being configured to run an orchestrator software and, during an enrolment phase, at initialization of a requesting node, to send a request of registration of the requesting node comprising a list of container images stored in the central registry and access rights of the requesting node to each container image of said list, and the cryptographic key of the requesting node;
and said central registry being configured to perform the steps of claim 2.
